# EUROPEAN PATENT APPLICATION

(11) **EP 3 138 626 A1**
(43) Date of publication of application: **08.03.2017**
(21) Application number: 15731091.3
(22) Date of filing: 29.04.2015
(51) Int. Cl.: B01J 8/06

(54) **STEAM-REFORMING REACTOR TUBE**

(30) Priority: 30.04.2014 ES 201430634
(71) Applicant: Abengoa Hidrógeno, S.A., 41014 Sevilla (ES)
(72) Inventor: BREY SÁNCHEZ, José Javier, E-41014 Sevilla (ES); SARMIENTO MARRÓN, Belén, E-41014 Sevilla (ES); GALLARDO GARCÍA-ORTA, Victoria, E-41014 Sevilla (ES); SERRANO RUIZ, Juan Carlos, E-41014 Sevilla (ES)
(74) Representative: Pons Ariño, Angel
(86) International application number: PCT/ES2015/070354
(87) International publication number: WO 2015/166129

(57) **Abstract**

The invention relates to a reactor tube for the steam-reforming of C2+ hydrocarbons and/or C2+ alcohols, preferably ethanol, formed by a nickel-free stainless steel metal alloy or formed by a metal alloy of stainless steel covered with a nickel-free material. The invention also relates to the reformer comprising the reactor tube of the invention.

## Description

### DESCRIPTION

The present invention relates to a reforming reaction tube of C₂₊ hydrocarbons and/or C₂₊ alcohols, preferably ethanol, with steam formed by a nickel-free stainless steel metal alloy or formed by a stainless steel metal alloy coated with a nickel-free material. Furthermore, the present invention relates to the reformer comprising the reaction tube of the invention.

### STATE OF THE ART

At this time, a large variety of reformers is known, which allow the reforming of hydrocarbons and alcohols for hydrogen production later used for the production of electrical energy by means of fuel cells.

An essential part of the reformer is the reaction tube; this tube has a catalytic area where the catalyst is placed and the reforming reaction occurs. In these reforming reactions wherein hydrocarbons or alcohols with a number of carbons greater than two (C₂₊) and steam, generally, on being mixed at high temperatures, before reaching the catalytic area, in particular, the ethanol, given its reactive nature, thermally decomposes generating species such as ethylene, which end up polymerizing on the tube surface forming coke. The coke formed is finally entrained by the stream until the catalytic bed, decreasing the contact surface of the catalyst with the supply and also causing an increase of pressure drop in the reaction tube and the obstruction thereof.

The materials currently used to manufacture these reformers and, in particular, reaction tubes, are nickel stainless steel alloys, for example alloys such as INCOLOY®, AISI 310® or AISI 316®. (US2011/0272070A1).

The thermal decomposition of the ethanol/steam mixture in the non-catalytic area depends on a series of factors such as ethanol concentration, residence time in the non-catalytic area, reformer tube materials, etc.

There are some alternatives to reduce coke formation in the catalytic area of the tube modifying some of the process conditions (Nicolas Bion et al., Catalysis, 2010. 22, 1-55). Thus, coke formation can be substantially reduced by using noble metals in the catalyst, since there is less carbon formation on these metals. On the other hand, the presence of oxygen in the reactive stream inlet let decrease coke formation due to the combustion of the carbonaceous matter produced during the reaction. However, this solution may lead to the formation of hot points on the catalyst surface, giving rise to an increase in the catalyst metal particle size (sintered) and the decrease in activity.

Therefore, it is important to find an alternative to avoid coke formation, thus avoiding the obstruction of the tubes and/or the increase in pressure drop and the subsequent loss of efficiency of the catalyst, without this giving rise to the formation of hot points in the reformer.

### DESCRIPTION OF THE INVENTION

The present invention provides a solution to the problem of coke formation due to the decomposition of mixtures of at least one hydrocarbon or one C₂₊ alcohol and steam at temperatures of up to 1,000°C, by the use of nickel-free stainless steel alloys for the manufacturing of reforming reaction tubes, or by the use of nickel-free coating materials for the manufacturing of reforming reaction tubes.

The reforming reaction tube can be divided in three parts: a reactive stream inlet area, a catalytic area where the reaction occurs and the catalyst is deposited or impregnated and a generation area and/or reforming gas outlet (H₂, CO, CO₂ and CH₄). In this configuration, the coke is particularly formed in the first area where the hydrocarbons or alcohols and the steam are found. Once formed, this coke passes to the second area, where the catalyst is found. However, in this second area coke may also be produced so that it is advisable that both areas, the inlet area and the catalytic area, are formed or manufactured by a nickel-free stainless steel alloy or, if manufactured using a nickel stainless steel alloy, coated by a nickel-free material.

By the use of these materials, it has been achieved to eliminate coke formation in the area of the reforming tube before the catalytic area. In this way, it is avoided that the coke reaches the catalyst area, thus avoiding the reduction of the effective contact area and the subsequent decrease in catalytic activity and avoiding, in addition, that the pressure drop in the tube increases. Furthermore, this solution manages to avoid the use of supplies with oxygen eliminating the formation of hot points in the catalyst.

In a first aspect, the present invention relates to a reforming reaction tube of at least one C₂₊ hydrocarbon and/or one C₂₊ alcohol and steam comprising three consecutive areas: a reactive stream inlet area, a catalytic area where the reaction occurs and the catalyst is deposited or impregnated and a generation area and/or reforming gas outlet characterized in that the inlet area and the catalytic area of the tube is formed by a stainless steel metal alloy which does not contain nickel or formed by a stainless steel metal alloy coated by a material which does not contain nickel.

The generation area and/or reforming gas outlet may be formed by any suitable material for the present application and known by any person skilled in the art, such as, for example, stainless steel alloys containing nickel and described in the section of the state of the art. In a particular embodiment, this generation area and/or reforming gas outlet may also be formed by a stainless steel metal alloy that does not contain nickel or coated by a material that does not contain nickel disclosed in the present invention.

"C₂₊ hydrocarbons" are understood in the present invention to be aliphatic chains, saturated or unsaturated (olefins), linear or branched, which have 2 or more carbon atoms, preferably from 2 to 20 carbon atoms; it may also refer to cyclic hydrocarbons which may have more than three saturated or unsaturated (aromatic) carbon atoms. In a particular embodiment, C₂₊ hydrocarbons are understood as a mixture of hydrocarbons as defined above, more particularly liquid hydrocarbons, such as, for example, petrol or diesel.

"C₂₊ alcohols" are understood in the present invention to be aliphatic chains, linear or branched, preferably of 2 to more carbon atoms, preferably of 2 to 6 carbon atoms, and with at least one -OH substituent, preferably with an -OH substituent, diols or triols, such as, for example, glycerine. In a preferred embodiment, the alcohol is ethanol.

"Stainless steel which does not contain nickel" is understood in the present invention as an iron alloy with a minimum of 10 wt% of chromium with respect to the final alloy and carbon and which may contain other metals, except nickel, or other non-metal elements. The quantity of iron must be at least 50 wt% with respect to the final alloy and the quantity of carbon less than 1.5 wt% with respect to the final alloy, preferably less than 0.10 wt% of carbon. The other metals it may contain are, without being limited to, aluminium, molybdenum, manganese, silicon or any of their combinations, among others. The stainless steels of the present invention can be used at temperatures of up to 1,000°C, preferably between 650-850°C, without losing their mechanical or structural properties.

In a preferred embodiment, the stainless steel alloy, in addition to iron, chromium and carbon, contains aluminium.

More preferably, the alloy comprises at least 50 wt% of iron, less than 0.10 wt% of carbon, at least 12 wt% of chromium and less than 10 wt% of aluminium with respect to the final alloy.

Even more preferably, the alloy comprises between 60 and 80 wt% of iron, less than 0.05 wt% of carbon, between 12 and 30 wt% of chromium and between 3 and 7 wt% of aluminium with respect to the final alloy.

In a more preferred embodiment, the alloy also contains molybdenum, more preferably in a proportion less than 5 wt% with respect to the final alloy and even more preferably of between 1 to 4 wt%.

In a more preferred embodiment, the alloy also contains silicon and/or manganese, more preferably, the proportion of silicon and/or manganese is less than 1.7 wt% with respect to the final alloy and even more preferably of between 0.2 and 1.3 wt%.

In a more preferred embodiment, the alloy consists of iron, carbon, chromium, aluminium, molybdenum, manganese and silicon, more preferably, the alloy comprises less than 0.10 wt% of carbon, at least 12 wt% of chromium, less than 10 wt% of aluminium, less than 5 wt% of molybdenum, less than 1 wt% of silicon and less than 0.70 wt% of magnesium and iron until completing 100 wt%.

In an even more preferred embodiment, the alloy comprises less than 0.05 wt% of carbon, between 12% and 30 wt% of chromium, between 3% and 7 wt% of aluminium, between 1 % and 4 wt% of molybdenum, less than 0.80 wt% of silicon and less than 0.50 wt% of magnesium and iron until completing 100 wt%.

When the tube is formed with a stainless steel alloy containing nickel, said tube must be coated by a material nickel-free. The coating material of the tube may be any material known by a person skilled in the art without nickel in its composition and which can be used at a temperature of up to 1,000°C, preferably in between 650-850°C, without losing its mechanical or structural properties. In a preferred embodiment, the materials capable of being used for coating the reaction tubes are metal nitrides, where the metal may be any, excluding nickel, and more preferably they can be selected from among titanium nitride (TiN), chromium nitride (CrN), aluminium and titanium nitride (TiAlN) or chromium and aluminium nitride (AlCrN), among others. In a preferred embodiment, the coating material of the invention is an aluminium and titanium nitride (TiAlN) or chromium and aluminium nitride (AlCrN). This type of materials are commercially available and they can be acquired through distributors known by a person skilled in the art, coatings such as, for example, but without being limited to, Lumena® or Alcrona Pro®.

The preferred reaction tube of the present invention to carry out the reforming with steam has dimensions such that it is advisable that this tube is formed or manufactured by the alloy described in the present invention instead of steel tubes coated by the material described in the present invention. In a preferred embodiment, the tube has measurements of 1,000-1,400 mm in length and of 20-50 mm in diameter.

However, the reaction tube may have other dimensions and may be manufactured by any type of stainless steel alloy suitable for steam reforming and which is coated by the aforementioned material.

In another preferred embodiment, the tube of the invention comprises fins where the catalyst is impregnated or deposited. Due to the structure of said tubes and their dimensions, it is especially important to avoid coke formation in the tube inlet area and that this coke reaches the fins, since said obstruction would cause an increase in the pressure drop and, to a greater degree, it may reduce catalyst activity giving rise to unwanted by-products in the process, and it would therefore decrease the reformer gas production.

The tubes of the present invention are suitable for reforming reactions with steam at a temperature of up to 1,000°C and more preferably of between 650°C and 850°C.

Another aspect of the present invention relates to a reformer for a steam reforming system comprising at least one reaction tube disclosed in the present invention. In a preferred embodiment, the reformer is multi-tubular.

Therefore, another aspect of the present invention relates to a multi-tubular reformer comprising the reaction tubes disclosed in the present invention.

In a preferred embodiment, both the reaction tubes and the multi-tubular reformer it contains have a structure which has been described in Spanish patent application ES2434666A1.

Throughout the description and the claims the word "comprises" and its variants are not intended to exclude other technical characteristics, additives, components or steps. For persons skilled in the art, other objects, advantages and characteristics of the invention will be inferred in part from the description and in part from the practice of the invention. The following figures and examples are provided by way of illustration, and are not intended to limit the present invention.

### BRIEF DESCRIPTION OF THE FIGURES

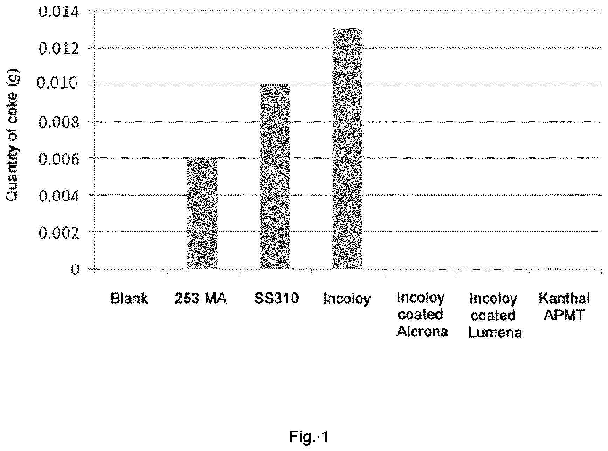

Fig. 1.- Represents the quantity of coke formed by different materials (SandviK 253 MA ® (11% Ni), SS 310 ® (22% Ni) and Incoloy 800 HT ® (30-35% Ni); Kanthal APMT ® (0% Ni); and Incoloy 800 HT ® coated with Alcrona Pro ® (0% Ni) or coated with Lumena ® (0% Ni)).

### EXAMPLES

Assays were performed in a microreactor, equipped with a reaction tube, placed inside an electric oven and an evaporator, for the supply of the reactives to the tube in gaseous form, both placed within a chamber, the condensables (water and the other less volatile products) are trapped due to a Peltier cooling plate which operates at 5 °C. The non-condensable gases exit the system through a mass flow meter (MFM) and are driven to the gas chromatograph (GC) for their analysis.

The methodology followed in the assays was as follows: the alloys used were cut in the form of rectangular sheets of 1 cm x 3 cm approximately and they were introduced in a quartz reactor equipped with porous plate. Before introducing the metal plate in the reactor, it was cleaned with ethanol to remove dirt; it was dried and weighed in a balance equipped with three decimal points. The reactor was connected to the apparatus and leaks were tested, pressurizing the reactor and checking that pressure was maintained during 5 min. The reactor was then heated to a temperature of 700 °C with a heating ramp of 10 °C/min in a flow of N₂ (20 ml/min). Once the temperature of 700 °C had been reached, a mixture of ethanol/steam with a steam/carbon (S/C) ratio of 2 was introduced in the reactor, with a flow of 0.02 ml/min of the aqueous mixture, and a flow of N₂ of 20 ml/min to entrain the reaction products. The pressure was kept at 1 bar throughout the assay. The piece as maintained in these conditions during 24 h, after which the ethanol supply was stopped and the reactor was cooled to ambient temperature in N₂ flow. Once cooled, the piece was visually inspected and it was weighed again to see the quantity of coke formed therein. The quartz reactor was also weighed before and after, to measure the possible coke released from the part during the assay (retained in the porous plate of the reactor).
Table 1 shows the conditions for the aforementioned assays:

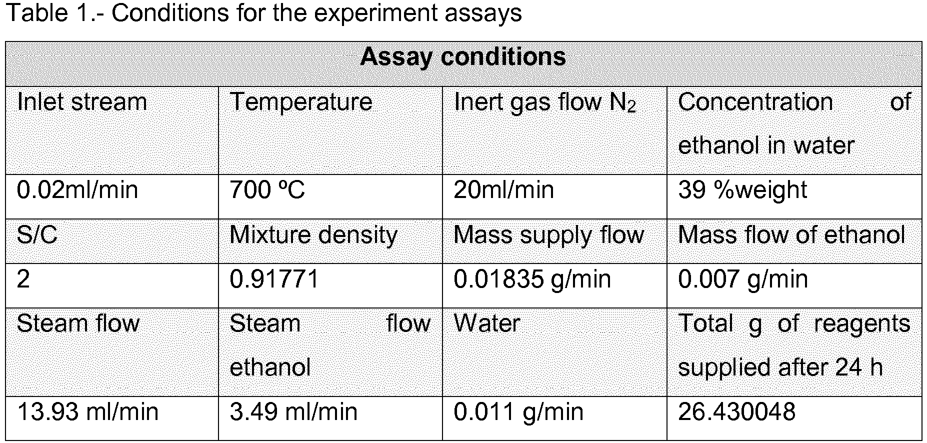

The materials used were:
- commercial nickel stainless steel alloys of: SandviK 253 MA ® (11% Ni), SS 310 ® (22% Ni) and Incoloy 800 HT ® (30-35% Ni);
- a commercial stainless steel allow not containing nickel of Kanthal APMT ®; and
- commercial coatings which do not contain nickel which were used for the Incoloy 800 HT ® coating: Alcrona Pro ® and Lumena ®.

Tables 2 to 6 show the data obtained in the aforementioned assays with the different materials and with no material (table 5).

**Table 2.-Data of the coke formation assays for SandviK 253 MA**

| **SandviK 253 MA** | | |
|---|---|---|
| **Starting weights** | | |
| Weight part 1 (g) | weight piece 2(g) | Reactor weight(g) |
| 9.583 | 9.915 | 25.452 |

| **End weights** | | |
|---|---|---|
| Weight piece 1(g) | weight piece 2(g) | Reactor weight(g) |
| 9.589 | 9.921 | 25.452 |

**Table 3.- Data of the coke formation assays for SS310**

| **SS 310** | | |
|---|---|---|
| **Starting weights** | | |
| Weight piece 1(g) | weight piece 2(g) | Reactor weight(g) |
| 6.172 | 6.096 | 25.451 |

| **End weights** | | |
|---|---|---|
| Weight piece 1(g) | weight piece 2(g) | Reactor weight(g) |
| 6.182 | 6.109 | 25.452 |

**Table 4.- Data of the coke formation assays for Incoloy 800 HT**

| **Incoloy 800 HT** | | |
|---|---|---|
| **Starting weights** | | |
| Weight piece 1(g) | weight piece 2(g) | Reactor weight(g) |
| 3.188 | ----- | 25.450 |

| **End weights** | | |
|---|---|---|
| Weight piece 1(g) | weight piece 2(g) | Reactor weight(g) |
| 3.201 | ----- | 25.450 |

**Table 5.- Data of the coke formation assays for a reference assay (Blank)**

| **Blank** | | |
|---|---|---|
| **Starting weights** | | |
| Weight piece 1(g) | weight piece 2(g) | Reactor weight(g) |
| ----- | ----- | 25,450 |

| **End weights** | | |
|---|---|---|
| Weight piece 1(g) | weight piece 2(g) | Reactor weight(g) |
| ----- | ----- | 25.450 |

**Table 6.- Data of the coke formation assays for Kanthal APMT**

| **Kanthal APMT** | | |
|---|---|---|
| **Starting weights** | | |
| Weight piece 1(g) | weight piece 2(g) | Reactor weight(g) |
| 5.458 | ----- | 25.233 |

| **End weights** | | |
|---|---|---|
| Weight piece 1(g) | weight piece 2(g) | Reactor weight(g) |
| 5.458 | ----- | 25.233 |

**Table 7.- Data of the coke formation assays for Incoloy coated with AlCrona**

| **Incoloy coated AlCrona** | | |
|---|---|---|
| **Starting weights** | | |
| Weight piece 1(g) | weight piece 2(g) | Reactor weight(g) |
| 3.015 | ----- | 25.450 |

| **End weights** | | |
|---|---|---|
| Weight piece 1 (g) | weight piece 2(g) | Reactor weight(g) |

**Table 8.- Data of the coke formation assays for Incoloy coated with Lumena**

| **Incoloy coated Lumena** | | |
|---|---|---|
| **Starting weights** | | |
| Weight piece 1 (g) | weight piece 2(g) | Reactor weight(g) |
| 2.910 | ----- | 25.233 |

| **End weights** | | |
|---|---|---|
| Weight piece 1 (g) | weight piece 2(g) | Reactor weight(g) |
| 2.910 | ----- | 25.233 |

Some of the previous assays were performed with two plates or sheets, referred to in the tables as "Weight piece 1" and "Weight piece 2", with the same characteristics to guarantee repetitiveness of the results. The weight differences observed in the initial weights are due to slight differences in size between both plates. Both were introduced simultaneously in the reactor with the aim that the reaction conditions were equal. The weight difference of each one of the pieces in the initial state (before the reaction) and final state (after the reaction) is the total accumulated coke. In the case of the reference assay, no plate or sheet was introduced (table 5).

"Reactor weight" relates to the weight of the reactor before (initial weight) and after the assay (final weight), without taking into consideration the plate weights. It is observed that there is no appreciable weight variation so that it can be concluded that all the coke generated is deposited on the pieces and, therefore, it can be measured subtracting the end and starting weight of the pieces.

A summary table is shown below, taking into consideration the materials used:

**Table 9.-Summary of the experiment calculations**

| **Experiment calculations** | | | | | | | |
|---|---|---|---|---|---|---|---|
| | 253 MA | SS 310 | Incolo y 800 HT | Blank | Kanthal APMT | AlCron a | Lumena |
| **coke piece 1** | 0.006 | 0.010 | 0.013 | ----- | 0.000 | 0.000 | 0.000 |
| **coke piece 2** | 0.006 | 0.011 | ----- | ----- | ----- | ----- | ----- |
| **coke reactor** | 0.000 | 0.001 | 0.000 | 0.000 | 0.000 | 0.000 | 0.000 |

The results of the assays described above are represented in Fig. 1.

According to the results obtained, we can concluded that the material Incoloy 800HT with greatest Ni content is an alloy more inclined to coke formation, whilst the Ni-free materials (Kanthal APMT) or with Ni-free coatings (AlCrona and Lumena) did not form coke.

## Claims

1. A reforming reaction tube of at least one C₂₊ hydrocarbon and/or one C₂₊ alcohol and steam comprising three consecutive parts: a reactive inlet stream area, a catalytic area where the reaction occurs and the catalyst is deposited and a generation area and/or reforming gas outlet **characterized in that** the inlet area and the catalytic area of the tube is formed by a stainless steel metal alloy which does not contain nickel or by a stainless steel alloy coated by a material which does not contain nickel.

2. The tube according to claim 1, where the C₂₊ alcohol is ethanol.

3. The tube according to any of claims 1 or 2, where the stainless steel alloy which does not contain nickel comprises, in addition to iron, carbon and chromium, an element selected from the list comprising aluminium, molybdenum, silicon, manganese or any of their combinations.

4. The tube according to claim 3, where the alloy contains aluminium.

5. The tube according to claim 4, where the alloy contains less than 10 wt% of aluminium.

6. The tube according to any of claims 3 to 5, where the alloy comprises at least 50 wt% of iron, less than 0.10 wt% of carbon, at least 12 wt% of chromium and less than 10 wt% of aluminium with respect to the final alloy.

7. The tube according to claim 6, where the alloy comprises between 60 and 80 wt% of iron, less than 0.05 wt% of carbon, between 12 and 30 wt% of chromium and between 3 and 7 wt% of aluminium with respect to the final alloy.

8. The tube according to any of claims 3 to 7, where the alloy further contains less than 5 wt% of molybdenum with respect to the final alloy.

9. The tube according to claim 8, where the alloy contains between 1 and 4 wt% of molybdenum.

10. The tube according to any of claims 3 to 9, where the alloy contains less than 1.7 wt% of silicon and/or manganese with respect to the final alloy.

11. The tube according to claim 10, where the alloy contains between 0.2 and 1.3 wt% of silicon and/or manganese.

12. The tube according to claim 11, where the alloy comprises less than 0.10 wt% of carbon, at least 12 wt% of chromium, less than 10 wt% of aluminium, less than 5 wt% of molybdenum, less than 1 wt% of silicon and less than 0.70 wt% of magnesium and iron until completing 100 wt%.

13. The tube according to claim 12, where the alloy comprises less than 0.05 wt% of carbon, between 12% and 30 wt% of chromium, between 3% and 7 wt% of aluminium, between 1% and 4 wt% of molybdenum, less than 0.80 wt% of silicon and less than 0.50 wt% of magnesium and iron until completing 100 wt%.

14. The tube according to any of claims 1 or 2, where the coating material is a metal nitride, excluding nickel.

15. The tube according to claim 14, where the metal nitride is aluminium and titanium nitride or a chromium and aluminium nitride.

16. The tube according to any of claims 1 to 15, where said tube has measurements of 1,000 to 1,400 mm in length and of 20 to 50 mm in diameter.

17. The tube according to any of claims 1 to 16, where said tubes comprise fins where the catalyst is deposited.

18. The tube according to any of claims 1 to 17, where said tubes work at a temperature of up to 1,000°C.

19. The tube according to claim 18, where the temperature is of between 650°C and 850°C.

20. The tube according to any of claims 1 to 19, where the generation area and/or reforming gas outlet of the tube is also formed by a stainless steel alloy which does not contain nickel or formed by a stainless steel coated with a material which does not contain nickel.

21. A reformer for a steam reforming system, comprising at least one reaction tube described according to any of claims 1 to 20.

22. The reformer according to claim 21, where the reformer is multi-tubular.
